# EUROPEAN PATENT SPECIFICATION

(11) **EP 1 004 233 B1**
(45) Date of publication and mention of the grant of the patent: **30.07.2003**
(21) Application number: 98928349.4
(22) Date of filing: 30.06.1998
(51) Int. Cl.: A01D 46/26

(54) **PORTABLE AGRICULTURAL VIBRATING-COLLECTING MACHINE**
TRAGBARE LANDWIRTSCHAFTLICHE, VIBRIERENDE, SAMMELNDE MASCHINE
MACHINE AGRICOLE PORTABLE, VIBREUSE-COLLECTEUSE

(30) Priority: 30.06.1997 ES 9701499; 01.09.1997 ES 9702281 U; 17.02.1998 ES 9800454 U; 20.02.1998 ES 9800497 U; 30.03.1998 ES 9800852 U
(43) Date of publication of application: 31.05.2000
(73) Proprietor: Hispaes, S.L., 08182 San Feliu de Codines (ES)
(72) Inventor: GURRI MOLINS, Josep, E-08182 Sant Feliu de Codines (ES)
(74) Representative: De Rafael Gutierrez, Maria d. Luz (ES)
(86) International application number: ES9800190
(87) International publication number: WO99001022

(56) References cited:
- ES-A- 2 021 986
- ES-U- 1 000 253
- ES-U- 1 015 565
- ES-U- 1 020 705
- ES-U- 1 026 776
- ES-U- 1 031 113
- ES-U- 1 032 630
- FR-A- 2 305 927
- US-A- 3 457 713
- US-A- 3 459 269
- US-A- 3 696 597
- US-A- 3 924 390
- US-A- 4 759 128
- US-A- 4 873 820

## Description

### Field of the invention

This patent relates to a tree fruit vibrating-harvesting portable agricultural machine, of those designed to harvest fruits such as olives or almonds, which are picked from the trees by applying on a tree branch or secondary trunk a linear alternative or vibrating motion produced by a vibration generating mechanism, already known, engine driven and transmitted by means of a rod bearing at its end an element catching said branch/secondary trunk. In particular, the invention applies to above type machines, portable and with motive means of their own in order to be able to be carried out their work at places where there is no related motive power or lighting outlet available. Most of the means this invention is proposing are also applicable to other machines mainly agricultural machines, provided with a tool associated to a rod end, for example pruning devices by means of a saw for medium-sized branches located at a very high place, scissors for green and high small branches pruning or machines equipped with a tool attached to the frame itself , such as scissors for pruning low and small branches, knife mowing machines, punch presses, etc., whose operation transmits a reactive oscillation or shake (because of the higher tree mass on which they are acting with respect to the machine) to the assembly to which the engine is coupled.

The strong vibration and namely occasional bouncings which occur in this kind of machine demand to secure the assembly service life the need to find means which reinforces its component parts structure and namely said engine junction to the machine frame, as well as the connection of said rod to the vibration generating mechanism reducing as much as possible the overstresses sustained by the coupling sections.

### Background of the invention

Several machines are known having mentioned characteristics, namely documents FR-A-2,305,927, US-A-3,924,390, as well as utility model ES-A-1000253 which discloses a structure which became classical and generalized in this type of machines. On their part the utility models ES-A-1034422 and ES-A-1034423, of same applicant, relates to fixtures for this type of machines.

US-A-4,873,820 discloses a machine of the above type, wherein an articulation unit is included serving to connect the cited rod with a vibration transmitting element. Said articulation unit comprises a ball and socket attached to a connecting-rod of the vibration generating mechanism and linked to a forked end of the rod by means of a bolt, a needle cage being provided between said socket and said bolt. However, said bolt is not designed to break or fail upon eventual overstresses higher than normal stresses produced by vibrating operation of the machine. Also, said articulation unite does not allow the rod free rotation in both directions about its axis.

All those machines are characterized in that they have available a main frame which houses said vibrating motion generating mechanism (for example, a connecting rod-crank unit), driven by a standard two- or four-stroke-cycle heat engine and a long guided rod or pole, bearing at its end farthest from the machine an element for catching the tree branch or secondary trunk, said rod being in addition the one which transmits the vibrating motion from the generating mechanism up to the catching element. The vibrating motion generated by this type of mechanisms is a relatively high frequency alternating linear motion.

A problem which arises with this type of machines is that, because of the very nature of the function they have to perform, they sustain strong vibrations and occasionally bouncings (sharp stress in an undetermined, lengthwise or twisted direction with further back motion and repeating it), which are transmitted to the operator who is operating them affecting him in several ways. While the phenomenon of vibrations appears in a continuous and relatively regular way, provoking an effect of early fatigue to the operator, the phenomenon of bouncings occurs in an unexpected and occasionally violent manner and it can provoke differently serious injuries to the operator, as well as damages in the machine organs.

With reference to the bouncing phenomenon, it can be deducted that they are produced by the vibrating motion of the machine itself when entering in resonance and/or push-pull with the vibrating movement of the tree branch or trunk which is being vibrated which gives rise to a strong and sudden reaction strength on the catching element arranged at said machine rod end. Said reaction strength, depending on its direction, can provoke a rod violent rotation motion on its lengthwise shaft, a rod violent bending motion, similar to a whipping, or both matched. This is why it exists a general interest in achieving devices for this type of vibrating-harvesting machines which prevent the possible effects said bouncing phenomenon could have on the operators physical integrity.

Another drawback of this type of machines is that the catching element at the rod free end remains in a predetermined orientation with respect to the machine, because the linking system between the rod and the vibration generating mechanism does not allow the rod to rotate about its own axis.

On the other hand, when said engines are applied to portable machines, i.e. self-contained machines, such as above mentioned vibrating-harvesting machines, sawing or pruning machines and the like, their frames and cases are also sustaining strong vibrations and a substantially lengthwise oscillation or to and fro motion provoked by the action/reaction of the vibrating forces or shakings which are applied to the tree branch or trunk to have the fruits fall, for cutting or other purposes. This to and fro or oscillation motion and the vibrations generated, considering the inertia of the engine weight itself, and its location at one machine end, greatly overhanging with respect to said main frame to which it is joined by a collar-shaped part, produce very often a (partly or complete) early breakage of the cases and frame junction the engine block assembly to the vibrating or similar mechanism body.

The invention seeks to overcome said problems by proposing for such purpose means that, on one hand provide a great strength to the engine junction to the machine frame as well as other means to achieve a connection or coupling between the rod, bearing the catching member at its free end and the vibrating mechanism or to a part connected to said mechanism which makes possible that said rod rotates or is occasionally broken when it exceeds a certain overstress.

### Short description of the invention

The invention relates to a tree fruit vibrating-harvesting portable agricultural machine according to claim 1,

Other characteristics and advantages of the invention will clearly be seen in the detailed description of several examples of no limitating embodiments illustrated in drawings attached.

### Short description of the drawings

Said drawings show:
Fig. 1, a schematized side elevation view of the vibrating machine according to the invention, which comprises the connecting organ and the junction fixture which are proposed associated to the rod bearing the catching member and an assembly of parts which determine an external auxiliary frame which is applied on the engine and which relates it with the main frame;
Fig.2, a schematized elevation view of the junction fixture mounting which makes possible that the rod rotates, installed within the machine frame, together with the vibration generating mechanism;
Fig. 3, a likewise exploded side elevation view of said junction fixture, allowing to note the several elements composing them;
Fig. 4, a schematized view which illustrates an alternate embodiment of said junction fixture, located in this case outside the machine frame, only partly illustrated, directly connected to the catching member distal rod end;
Fig. 5 and 6, elevation and exploded views of said junction fixture;
Fig. 7, a schematized elevation view of one part of the machine with the disclosed connecting organ protecting against overstresses;
Fig. 8, an exploded elevation view of the connecting organ shown in Fig. 7;
Fig. 9, an elevation view of an alternate simplified embodiment of the connecting organ of Fig. 7 and 8;
Fig. 10, an exploded view of said connecting organ of Fig. 9;
Fig. 11 to 14, elevation views, rear view, lower and higher views, respectively of the elements constituting an auxiliary frame to reinforce the engine junction to the main frame, reducing the vibration effects.

### Detailed description of several examples of embodiment

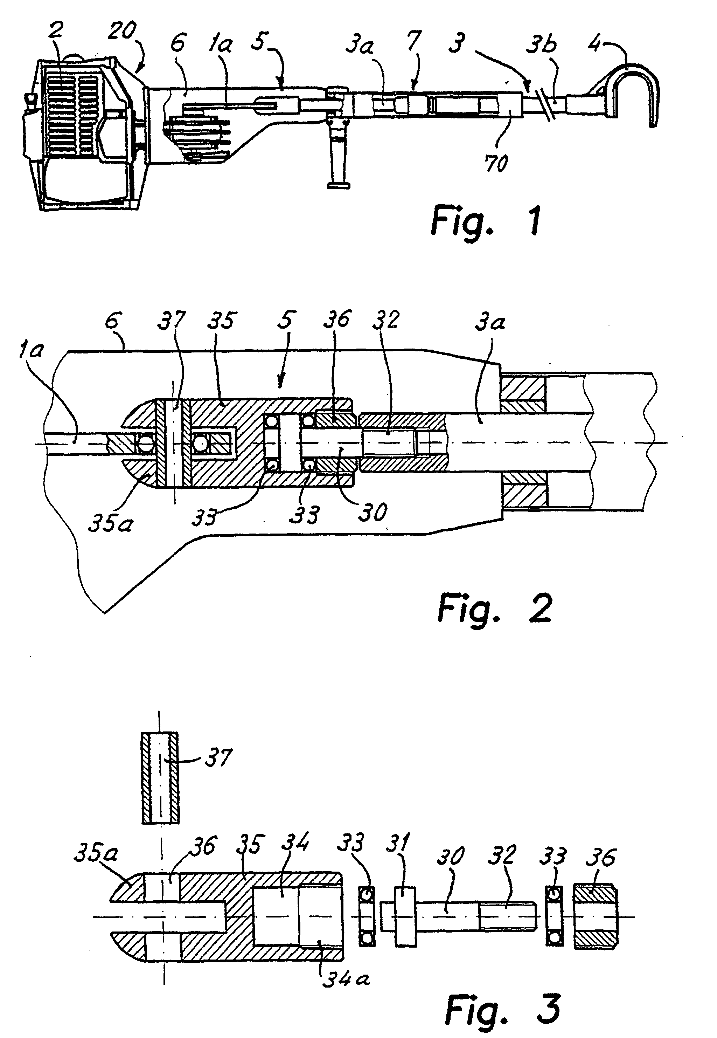

With reference first to Fig. 1, same shows a vibrating-harvesting portable agricultural machine according to the invention, which includes an already known vibration generating mechanism 1, driven by an engine 2 and transmitted through a rod 33 bearing at its end a catching member 4. Said catching member 4 has the function to hold a tree branch or secondary trunk to transmit it the vibrations generated by the machine in order to have the fruits they contain drop.

Said machine is characterized in that it comprises means for neutralizing the vibration effect and occasional bouncings on the rod 3 and on a part joining the engine 2 to a machine frame 6, which comprises: a junction fixture 5 which keeps an end of said rod 3 distal from the member 4, or a part 3a extension thereof, connected to the vibration mechanism transmitting element 1a and which allows that said rod 3 freely rotates in both directions, about its axis; a connecting organ 7, 7a which has available a first 8 and a second 9 parts integral respectively with a first 3a and a second 3b segments of said rod 3, or respectively with said rod 3 and with a connecting element to the vibration generating mechanism 1, which may be inserted between them socketed retained by a removable locking member, through a retaining element 11, made of a material which may be broken when sustaining overstresses exceeding a predetermined value or threshold; and an auxiliary frame 20 surrounding the engine 2 with at least a front part 21, coupled to the engine 2 by a first face, a back part 22 coupled by a second face, opposite to the former, surrounding the output shaft and a higher tension member 23 and a lower tension member 24 joined by their ends to the front parts 21 and back parts 22 by at least two of their opposite sides, said tension members 23, 24, which may be stretched, act in parallel to the machine alternate linear motion or oscillation direction, enclosing and compressing the engine in said direction, said auxiliary frame 20 is linked to the back end of the machine main frame 6.

As it is shown in Fig. 2, said junction fixture 5 is located within the machine main frame 6 at a point located between the vibration alternate linear motion generating mechanism 1 and an internal linearly guided portion of a rod 3a which transmits said alternate linear motion, said rod 3a being connected by its external portion said rod end 3 distal from the catching element 4. Said fixture 5 comprises an axial part or core 30 provided close to one of its ends with a collar 31 and whose other end has a junction element 32 to coaxially lock said core 30 with the end of said rod 3 internal portion 3a, said core 30 is arranged inserted together with two axial bearings 33, one to each of the sides of said collar 31, within a housing 34 located at one end of a body 35, said housing 34 having available a threaded portion 34a close to its mouthpiece, provided to receive an externally threaded sleeve 36 screwed which is coupled coaxially embedded on the core 30, acting as retaining part for the collar 31 between the two bearings 33, the body 35 having available at its opposite end, a fork-shaped portion 35a with a through hole 36 perpendicular to its lengthwise axis for mounting a bolt 37 for its junction with the vibration alternate linear motion generating mechanism 1.

Said fork-shaped portion 35a with a through hole 36 perpendicular to its lengthwise axis for mounting a bolt 37 is joined, through a radial bearing 38 to a connecting rod head 1a which is comprised in a vibration alternate linear motion generating connecting-rod-crank mechanism.

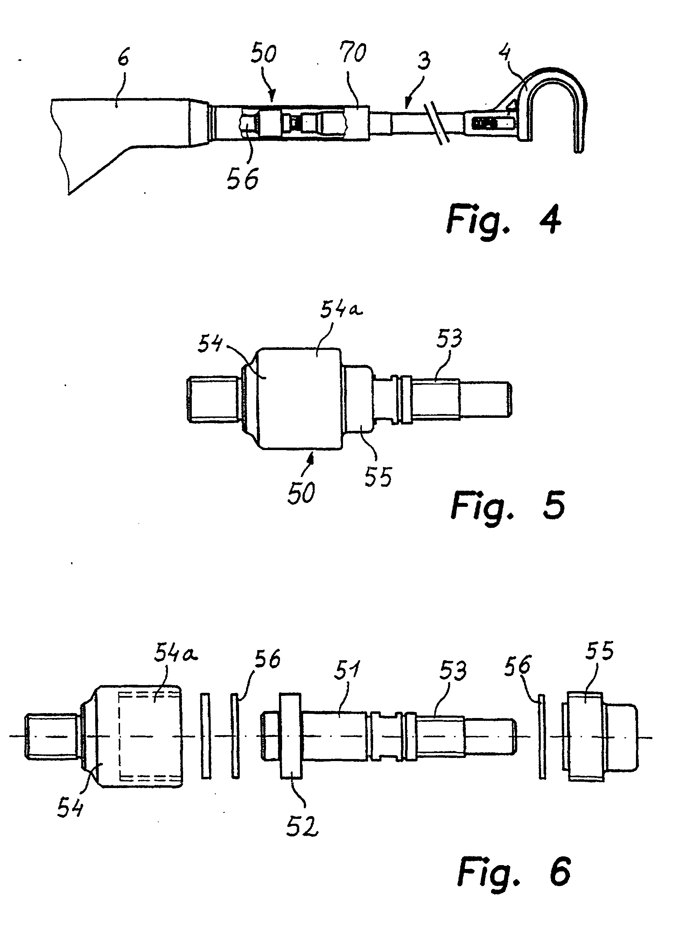

In the variation of embodiment illustrated by Fig. 4 to 6, said junction fixture 50 is located external the machine main frame 6 and comprises an axial part 51 provided close to a collar 52 or rim first end at a certain distance from a second end of a portion 53 for a screwed junction or other mechanical locking means, with the rod end 3 distal from the catching member 4 coaxially coupled on said threaded portion 53, whose axial part 51 is arranged inserted within a tubular body 54, with a drinking-glass-shaped enlarged portion 54a which may house the collar 52 on its bottom, said portion 54a being internally threaded to receive socketed to its mouthpiece an externally threaded sleeve 55, which is coaxially coupled on the axial part 51, its threaded portion 53 outwardly protruding through it to catch said collar 52 within the drinking-glass-shaped body 54a with prior arrangement on each of said collar 52 faces of a needle bearing 56 and in that said tubular part 54 possesses a portion 54b fillet profiled for its junction to a vibrating element 56.

As stated for Fig. 6, said portion 53 is threaded.

In the machine an external housing 70 has also been provided as a liner which protects the rod 3 initial section likewise covering the junction fixture 50 or connecting organ 7, 7^{a} allowing that the operator catches it with one hand without any risk of damages for him.

According to Fig. 6, between the threaded portion (53) and the part end (51) there exists a plain length (57) whose function is to act as a guide for an internally screwed socket (58) which is ending the rod (3).

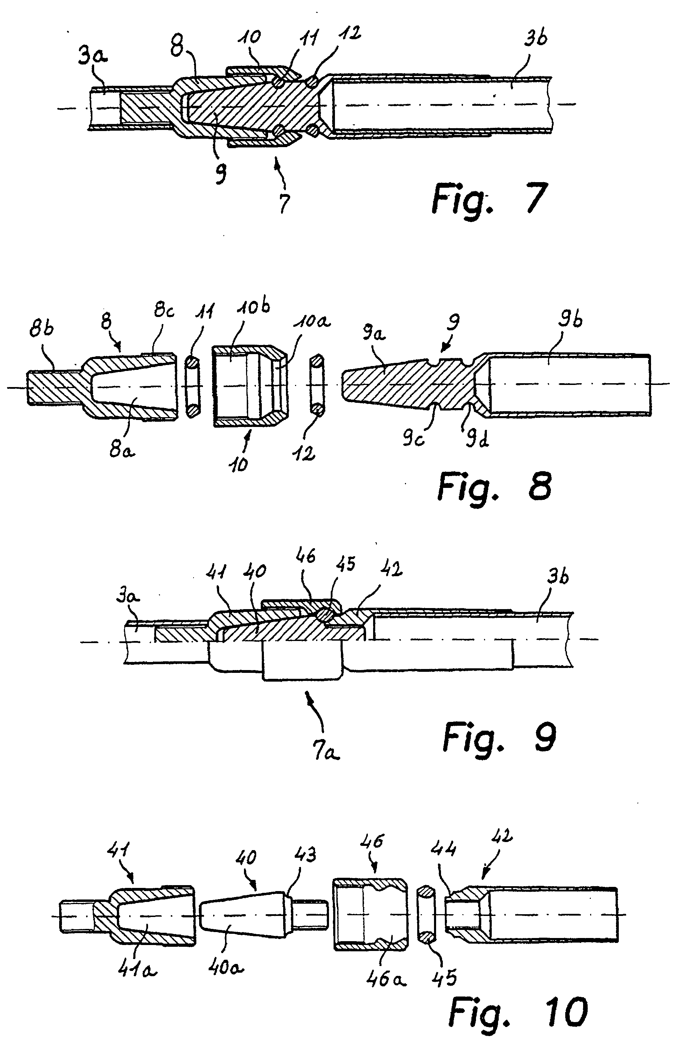

With respect to the overstress limiting connecting organ, according to Fig. 7 and 8, referred locking member is constituted by a sleeve (10) and said retaining element consists in a ring (11) which is housed in a lesser spanned junction part (9) groove (9c).

Coupling between the first and second junction parts (8, 9) is a conical link comprising one of the junction parts (9) male part (9a) which is arranged inserted within another female part (8a) of the other junction part (8), said two junction parts (8,9) have available extensions for permanent or removable junction with the rod (3) segments (3a, 3b) or a vibration transmitting element and a rod (3) end distal from the catching hook (4).

In Fig. 7 and 8, it is noted that said first junction part (8) is provided at one of its ends with an external fillet (8b) which may be screwed in an internal related fillet at the first segment (3a) end said first junction part (8) having available at its other larger diameter end a female frustum-shaped recess (8a) coaxial and having an external fillet (8c) and in that said second junction part (9) is provided , at one of its ends, with an internal cylindric hole (9b) which may be pressure bond or screwed at a related end of the rod (3) second segment (3b), said second junction part (9) having at its other end a male frustum-shaped protrusion (9a) coaxial, with a conicity identical to that of the female recess (8a) and which may be inserted in it, said second junction part (9) having available a cylindrical central area provided with two annular grooves (9c, 9d) in the former of which said retaining ring (11) is inserted and in the second of which another retaining ring (12) is inserted and remains locked in the space between the two mentioned retaining rings (11, 12) a collar (10a) of said locking sleeve (10) which is provided at its opposite end with a fillet internally threaded (10b) which may be screwed in related external fillet (8c) of the first junction part (8).

In said same figures, the ring (12) remains housed in a groove (9d) of the junction part (9) and located external the sleeve (10), when this later acts linking said parts (8, 9) so that said ring (12) constitutes a stop, which actively assists the release between the two parts (8, 9) when unscrewing the sleeve (10).

According to a simplified variation of embodiment, illustrated in Fig. 9 and 10, said connecting organ (7a) comprises a part (40) which may be socketed by one of its ends with the first segment (3a) end or an auxiliary part (41) integral with it and whose other end is prepared to be joined to the beginning of the second segment (3b) or an auxiliary part (42) which extends it, said junction part (40) having available a bevel (43) cooperating with a related bevel (44) of the end of the second segment (3b) or the reinforcing part (42) to form a seat groove for the internal part of an annular retaining element (45), protecting against overstresses.

According to this variation, said locking member is constituted by a sleeve (46) prepared to be joined by one of its ends with the end of the first segment (3a) or the auxiliary part (41) and provided at its other end with an internal groove (46a) for housing the external part of said annular retaining element (45).

The fit between the part (40) and the first segment (3a) or the auxiliary part (4) end is a conical fit which comprises part (40) male part (40a) which is arranged inserted within first segment (3a) or the auxiliary part (41) end female part (41a).

The junction between the locking sleeve (46) and the auxiliary part (41) may be a screwed junction or a bayonet attachment.

On its side, the junction between the junction part (40) and the second segment (3b) end or the reinforcement part (42) is carried out according to a screwed junction or a bayonet attachment.

In these Fig. 9 and 10 it can be seen that the annular retaining element (45) remains locked between the groove formed by the two bevels (43 and 44) and the internal groove (46a) of the fastening sleeve (46), said sleeve (46) being rotatably linked with the parts (40 and 3a or 40 and 41) so that said sleeve (46) acts linking the parts (40 and 3a or 40 and 41) when screwed and actively assists to release the conical fit between the parts (40 and 3a or 40 and 41) when unscrewed so that the groove (46) will provoke a ring (45) shearing in the event a predetermined stress threshold is exceeded, the rod two segments (3a) and (3b) remaining loosened.

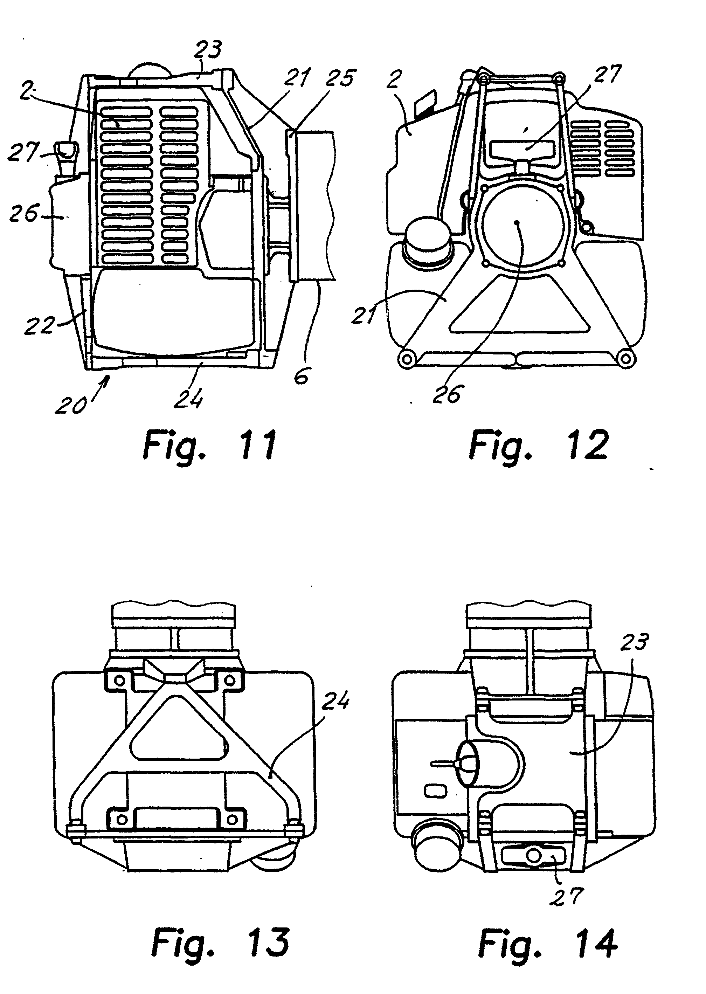

In the figures 11 to 14 it can be noted that said auxiliary frame comprises means which wraps the engine and the auxiliary parts assembly which constitute a reinforcement subframe 20 with at least a front part 21 and a rear part 22 applied against the front and back portions of said assembly and joined to each other under the tension of tensions elements 23, 24, said subframe 20 being linked through said front part 21 to a machine main frame 6 which houses a mechanism to transmit a suitable motion to the working tool.

As it can be seen in these figures, said subframe 20 basically comprises a front part 21 which is generally applied against the assembly clutch block 25, said part 21 being provided with a central part to which is linked the engine frame 2 by means of screws, flanges, welding or other system, and from which are protruding one or several brackets whose ends are joined by means of higher 23 and lower 24 tension members to another part which locks the engine by the rear part. Said tension members 23, 24 are joined at their front part, in addition to the front part 21 which packs the assembly, to the main frame 6 rear end.

Said subframe 20 front part 21 may be constituted by a portion which is an extension of the main frame 6 rear part.

In the more general case, said subframe 20 front part 21 is constituted by an independent part provided with a portion for coupling to the main frame 6 end to which it is tightly joined by already known junction means.

As for the rear part 22, it includes an annular portion which comprises the engine 2 starter 26 and has available a hole through which the starter 27 is arranged, which is protruding from said annular part, radial arms starting from it which at their ends are joined to said tension members 23, 24.

Said rear part 22 is screwed on the engine frame 2.

As illustrated in Fig. 12, the rear part 22 remains applied against the engine 2 rear face with the interposition of a resilient element between the part and the engine (not shown), compressed under the tension pressure of the junction tension members 23, 24 of the front part 21 and rear part 22 to the engine.

According to the invention, the span of said subframe 20 front 21 and rear 22 parts is such that it determines the engine 2 and auxiliary parts protecting wrapping preventing they can receive an occasional impact on their critical parts such as carburettor, exhaust pipe, sparking plug, fuel tank or others as well to the part suitably covered by said wrapping as to its sides.

Alternatively, it has been provided that the junction tension members 23, 24 are arranged covering the engine 2 and auxiliary parts assembly sides.

## Claims

1. A tree fruit vibrating-harvesting portable agricultural machine, of those designed to harvest fruits such as olives or almonds, which are picked from the trees by applying on a tree branch or secondary trunk a linear alternate or vibrating motion produced by a vibration generating mechanism (1) driven by an engine (2) and transmitted by means of a rod (3) bearing at its end a member (4) catching said branch/secondary trunk,
**characterized in that** it includes means to neutralize the effect of vibrations and occasional bouncing on a junction part of the motor (2) to the machine frame (6) including an auxiliary frame (20) which surrounds the engine (2) with at least a front part (21), coupled to a first face of the engine (2) surrounding the output shaft, a rear part (22) being coupled to a second face, opposite to the former, and at least two tension members (23, 24) joined by their ends to the front (21) and rear (22) parts, by at least two of its opposite sides, said tension members (23, 24) which may be stretched, act parallel to the machine alternate linear motion or oscillation direction, enclosing and compressing the engine (2) in said direction, whose auxiliary frame (20) is linked to the machine main frame (6) rear end.

2. Machine according to claim 1**characterized in that** the auxiliary frame (20) comprises means which wraps the engine and the auxiliary parts assembly which constitute a reinforcement sub-frame (20) with at least a front part (21) and a back part (22) applied against the front and back portions of said assembly and joined to each other under the tension of tensions elements (23, 24), said sub-frame (20) is linked through said front part (21) to a machine main frame (6) which houses a mechanism to transmit a suitable motion to the working tool.

3. Machine according to claim 2, **characterized in that** said sub-frame (20) basically comprises a front part (21) which is generally applied against the assembly clutch block (25), said part (21) being provided with a central part to which is linked the engine frame 2 by means of screws, flanges, welding or other system, and from which are protruding one or several brackets whose ends are joined by means of higher 23 and lower 24 tension members to another part which locks the engine by the rear part.

4. Machine according to claim 2 or 3 **characterized in that** said sub-frame (20) front part (21) is constituted by a portion which is an extension of the main frame (6) rear part.

5. Machine according to claim 2 or 3 **characterized in that** said sub-frame (20) front part (21) is constituted by an independent part provided with a portion for coupling to the main frame (6) end to which it is tightly joined by already known junction means.

6. Machine according to claim 2 **characterized in that** said rear part (22) includes an annular portion which comprises the engine (2) starter (26) and has a hole through which the starter (27), which is protruding from said annular part, radial arms starting from it which are joined at their ends to said tension members (23, 24).

7. Machine according to claim 2 **characterized in that** said rear part (22) is screwed on the engine frame (2).

8. Machine according to claim 3 **characterized in that** the rear part 22 remains applied against the engine (2) rear face with the interposition of a resilient element between the part and the engine, compressed under the tension pressure of the junctions tension members (23, 24) of the engine (2) front part (21) and rear part (22).

9. Machine according to claim 5 **characterized in that** said tension members (23, 24) are joined to its front part, in addition to the front part (21) which packs the assembly, to the main frame (6) rear end.

10. Machine according to claim 3 **characterized in that** the span of said sub-frame (20) front (21) and rear (22) parts is such that it determines an engine (2) and auxiliary parts protecting wrapping preventing they can receive an occasional impact on their critical parts such as carburettor, exhaust pipe, sparking plug, fuel tank or others as well on the parts suitably covered by said wrapping such as on its sides.

11. Machine according to claim 2 **characterized in that** the junction tension members (23, 24) are arranged covering the engine (2) and auxiliary parts assembly sides.

12. Machine according to claim 1, and further comprising means to make holding/catching branch or secondary trunk is easier and to neutralize the effect of occasional bouncings on the rod (3) which comprises a junction fixture (5, 50) which hold one of said rod (3) end distal from the member (4), joined to the vibration mechanism transmitting element (1a) or a part (3a) extension thereof, and which allows said rod (2) free rotation in both directions about its longitudinal axis.

13. Machine according to claim 1, and further comprising means to limit overstresses offsetting the vibrations and occasional bouncing negative effect on the rod (3) which comprises a connecting organ (7, 7a) having first (8) and second (9) parts respectively integral or attached to first (3a) and second (3b) segments of said rod (3), said first (8) and second (9) parts being susceptible of couple fit to one another and retained together by a removable locking member (10) assisted by a retaining element (11) made of a material which may break when sustaining overstresses exceeding a predetermined value or threshold.

14. Machine according to claim 1, and further comprising :
- a junction fixture (5) which keeps said rod (3) end distal from the member (4) or one part (3a) extension thereof, joined to a vibration mechanism transmitting element (1a) and which allows said rod (3) free rotation in both directions, about its axis; and
- a connecting organ (7, 7a) having first (8) and second (9) parts respectively integral or attached to first (3a) and second (3b) segments of said rod (3), said first (8) and second (9) parts being susceptible of couple fit to one another and retained together by a removable locking member (10) assisted by a retaining element (11) made of a material which may break when it sustains overstresses over a predetermined value or threshold.

## Patentansprüche

1. Tragbares Landwirtschaftsgerät zum Schütteln und Ernten von Baumobst, das zum Ernten von Obst wie z.B. Oliven oder Mandeln vorgesehen ist, die von den Bäumen dadurch gepflückt werden, dass man an einem Baumast oder Nebenstamm eine lineare Wechsel- oder Schwingungsbewegung durchführt, die durch einen schwingungserzeugenden Mechanismus (1) erfolgt, der von einem Motor (2) angetrieben und mittels einer Stange (3) übertragen wird, die an ihrem Ende ein Glied (4) trägt, das den Ast/Nebenstamm greift, **dadurch gekennzeichnet, dass** sie Mittel aufweist, mit denen die Wirkung des Schüttelns und des gelegentlichen Zurückprallens von einem Verbindungsstück des Motors (2) mit dem Geräterahmen (6) neutralisiert wird, mit einem Hilfsrahmen (20), der den Motor (2) zumindest mit einem vorderen Teil (21) umgibt, der an eine die Hauptwelle umgebende Fläche des Motors (2) gekoppelt ist, wobei ein rückwärtiger Teil (22) an eine zweite, der ersten Fläche gegenüberliegende Fläche gekoppelt ist, sowie mindestens zwei Spannelementen (23, 24), die an ihren Enden mit dem vorderen (21) und rückwärtigen Teil (22) verbunden sind, und zwar an mindestens zwei gegenüberliegenden Seiten, wobei die gegebenenfalls gestreckten Spannelemente (23, 24) parallel zur Richtung der linearen Wechsel- bzw. Schwingungsbewegung wirken, wobei sie den Motor (2) einschließen und in dieser Richtung zusammendrücken, wobei dessen Hilfsrahmen (20) mit dem rückwärtigen Ende des Gerätehauptrahmens (6) verbunden ist.

2. Gerät nach Anspruch 1, **dadurch gekennzeichnet, dass** der Hilfsrahmen (20) Mittel aufweist, durch die der Motor und der Hilfsteilaufbau umhüllt wird, die einen Verstärkungsunterrahmen (20) darstellen darstellen mit mindestens einem Vorderteil (21) und einem Rückteil (22), die an dem Vorder- und Rückteil des Aufbaus anliegen und unter der Spannung der Spannelemente (23, 24) miteinander verbunden sind, wobei der Unterahmen (20) über das Vorderteil (21) mit einem Geräterahmen (6) verbunden ist, in dem ein Mechanismus zur Übertragung einer geeigneten Bewegung auf das Arbeitswerkzeug untergebracht ist.

3. Gerät nach Anspruch 2, **dadurch gekennzeichnet, dass** der Unterrahmen (20) grundsätzlich ein Vorderteil (21) aufweist, das im allgemeinen am Kupplungsblock (25) des Aufbaus anliegt, wobei das Teil (21) einen Mittelteil aufweist, an dem der Motorrahmen (2) mit Schrauben, Flanschen, durch Verschweißen oder auf andere Weise befestigt ist und über den ein oder mehrere Klammern vorstehen, deren Enden durch höherliegende (23) und niedrigerliegende (24) Spannelemente mit einem anderen Teil verbunden sind, das die Maschine an der Rückseite verschließt.

4. Gerät nach Anspruch 2 oder 3, **dadurch gekennzeichnet, dass** das Vorderteil (21) des Unterrahmens (20) aus einem Abschnitt besteht, der eine Verlängerung des Rückteils des Hauptrahmens (6) darstellt.

5. Gerät nach Anspruch 2 oder 3, **dadurch gekennzeichnet, dass** das Vorderteil (21) des Unterrahmens (20) aus einem unabhängigen Abschnitt besteht, der mit einem Abschnitt zum Ankoppeln an das Ende des Hauptrahmens (6) versehen ist, mit dem dieser mittels bereits bekannter Verbindungsmittel dicht verbunden ist.

6. Gerät nach Anspruch 2, **dadurch gekennzeichnet, dass** das Rückteil (22) einen ringförmigen Abschnitt mit dem Starter (26) des Motors (2) und eine Bohrung, durch die der Starter (27), der über das ringförmige Teil hinausragt, sowie dort beginnende radiale Arme aufweist, die an ihren Enden mit den Spannelementen (23, 24) verbunden sind.

7. Gerät nach Anspruch 2, **dadurch gekennzeichnet, dass** das Rückteil (22) am Motorrahmen (2) angeschraubt ist.

8. Gerät nach Anspruch 3, **dadurch gekennzeichnet, dass** das Rückteil (22) stets an der Rückfläche des Motors (2) anliegt, wobei zwischen dem Teil und dem Motor ein elastisches Element zwischengeschaltet ist, das unter dem Spanndruck der Verbindungsspannelemente (23, 24) des Vorderteils (21) und Rückteils (22) des Motors (2) zusammengedrückt wird.

9. Gerät nach Anspruch 5, **dadurch gekennzeichnet, dass** die Spannelemente (23, 24) mit dessen Vorderteil (21) verbunden sind, durch das der Aufbau am rückwärtigen Ende des Hauptrahmens (6) befestigt wird.

10. Gerät nach Anspruch 3, **dadurch gekennzeichnet, dass** die Öffnungsweite zwischen dem Vorderteil (21) und dem Rückteil (22) des Unterrahmens (20) so bemessen ist, dass hierdurch eine Schutzumhüllung des Motors (2) und der Hilfsteile bestimmt wird, durch die verhindert wird, dass kritische Teile wie Vergaser, Auspuffrohr, Zündkerze, Benzintank oder auch andere Teile sowie die von der Verpackung abgedeckten Teile, wie z.B. Seiten, gelegentlich einer Schlagwirkung ausgesetzt sind.

11. Gerät nach Anspruch 2, **dadurch gekennzeichnet, dass** die Verbindungsspannelemente (23, 24) so angeordnet sind, dass sie den Motor (2) und die Seiten des Hilfsteilaufbau abdecken.

12. Gerät nach Anspruch 1, das weiterhin Mittel umfasst, durch die das Halten/Greifen eines Astes bzw. Nebenstamms erleichtert und somit die Wirkung eines gelegentlichem Abprallens von der Stange (3) neutralisiert wird, mit einer Verbindungshalterung (5, 50), durch das vom Element (4) entfernt liegende Ende der Stange (3) oder dessen teilweise Verlängerung (3a) mit dem den Schwingungsmechanismus übertragenden Element (1a) in Verbindung gehalten wird, wodurch eine freie Drehung der Stange (3) in beiden Richtungen um ihre Längsachse ermöglicht wird.

13. Gerät nach Anspruch 1, das weiterhin Mittel zur Begrenzung von Überbeanspruchungen umfasst, durch die die nachteilige Wirkung von Schwingungen und gelegentlichem Abprallen von der Stange (3) ausgeglichen wird, mit einem Verbindungsorgan (7, 7a) mit einem ersten (8) und einem zweiten (9) Teil, die zusammen mit dem ersten (3a) bzw. zweiten (3b) Abschnitt der Stange (3) ein einziges Stück bilden oder daran befestigt sind, wobei das erste (8) und zweite (9) Teil miteinander eine koppelnde Passung bilden und durch ein lösbares Sperrglied (10) zusammengehalten werden, das durch ein Halteelement (11) aus einem Material unterstützt wird, das beim Aushalten einer Überbeanspruchung über einen vorgegebenen Wert oder eine vorgegebene Schwelle Bruch erleidet.

14. Gerät nach Anspruch 1, weiterhin umfassend:
- eine Verbindungshalterung (5), die das von dem Element (4) entfernt liegende Ende der Stange (3) oder dessen teilweise Verlängerung (3a) mit dem den Schwingungsmechanismus übertragenden Element (1a) in Verbindung gehalten wird, wodurch eine freie Drehung der Stange (3) in beiden Richtungen um ihre Längsachse ermöglicht wird; sowie
- ein Verbindungsorgan (7, 7a) mit einem ersten (8) und einem zweiten (9) Teil, die zusammen mit dem ersten (3a) bzw. zweiten (3b) Abschnitt der Stange (3) ein einziges Stück bilden oder daran befestigt sind, wobei das erste (8) und zweite (9) Teil miteinander eine koppelnde Passung bilden und durch ein lösbares Sperrglied (10) zusammengehalten werden, das durch ein Halteelement (11) aus einem Material unterstützt wird, das beim Aushalten einer Überbeanspruchung über einen vorgegebenen Wert oder eine vorgegebene Schwelle Bruch erleidet.

## Revendications

1. Une machine agricole portable pour secouer-récolter des fruits des arbres, tels que des olives ou des amandes, qui sont recueillis en appliquant sur une branche ou tronc secondaire de l'arbre un mouvement linéaire de va-et-vient ou une secousse produite par un mécanisme (1) générant la secousse commandée par un moteur (2) et transmis par une tige (3) qui porte à son extrémité un membre (4) qui saisit cette branche/tronc secondaire, **caractérisé en ce qu'**il comporte des moyens pour neutraliser l'effet des secousses et les bonds éventuels de la pièce d'union du moteur (2) au châssis de la machine (6) comprenant un châssis auxiliaire (20) qui entoure le moteur (2) avec au moins une partie avant (21), reliée à une première surface du moteur (2) qui entoure l'arbre de sortie, une partie arrière (22) étant reliée à une deuxième surface opposée à la première, et au moins deux membres tendeurs (23,24) reliés par leurs extrémités aux parties avant (21) et arrière (22) par au moins deux de leurs côtés opposés, ces membres tendeurs (23, 24) pouvant être tendus, agissent parallèlement au mouvement de va-et-vient linéaire ou à la direction d'oscillation de la machine, enveloppant et comprimant le moteur (2) dans ce sens, ce châssis auxiliaire (20) étant relié à l'extrémité arrière du châssis principal (6) de la machine.

2. Machine conformément à la revendication 1 **caractérisée en ce que** le châssis auxiliaire (20) comprend des moyens qui enveloppent le moteur et l'ensemble des pièces auxiliaires qui constituent un châssis auxiliaire (20) de renfort ayant au moins une partie avant (21) et une partie arrière (22) appliquées contre les portions avant et arrière de cet ensemble et unis entre elles sous la tension des éléments tendeurs (23, 24), ce châssis auxiliaire (20) étant relié par l'intermédiaire de cette partie avant (21) au châssis principal (6) d'une machine qui loge un mécanisme pour transmettre un mouvement approprié à l'outil de travail.

3. Machine conformément à la revendication 2, **caractérisée en ce que** ce châssis auxiliaire (20) comporte basiquement une partie avant (21) qui est généralement appliquée contre le bloc d'embrayage (25), cette partie (21) étant pourvue d'une partie centrale à laquelle est relié le châssis du moteur (2) au moyen de vis, brides, soudure ou un autre système, et duquel dépasse un ou plusieurs crochets dont les extrémités sont reliées par des membres tendeurs supérieur 23 et inférieur 24 à une autre partie qui bloque le moteur par la partie arrière.

4. Machine conformément à la revendication 2 ou 3 **caractérisée en ce que** la partie avant (21) de ce châssis auxiliaire (20) est constituée par une portion qui prolonge la partie arrière du châssis principal (6).

5. Machine conformément à la revendication 2 ou 3 **caractérisée en ce que** cette partie avant (21) du châssis auxiliaire (20) est constituée par une partie indépendante pourvue d'une portion pour relier à l'extrémité du châssis principal (6) auquel elle est fermement reliée par des moyens d'union déjà connus.

6. Machine conformément à la revendication 2 **caractérisée en ce que** cette partie arrière (22) comporte une portion annulaire comprenant le démarreur (26) du moteur (2) et a un trou à travers lequel le démarreur (27) dépasse cette pièce annulaire, des bras radiaux partant de cette portion annulaire sont reliés à leurs extrémités à ces membres tendeurs (23, 24).

7. Machine conformément à la revendication 2 **caractérisée en ce que** cette partie arrière (22) est vissée sur le châssis du moteur (2).

8. Machine conformément à la revendication 3 **caractérisée en ce que** la partie arrière 22 reste appliquée sur la surface arrière du moteur (2) avec l'interposition d'un élément résilient entre la pièce et le moteur, comprimé sous la tension des membres tendeurs d'union (23, 24) de la partie avant (21) et de la partie arrière (22) du moteur (2).

9. Machine conformément à la revendication 5 **caractérisée en ce que** ces membres tendeurs (23, 24) sont reliés à sa partie avant en plus de la partie avant (21) qui serre l'ensemble, à l'extrémité arrière du châssis principal (6).

10. Machine conformément à la revendication 3 **caractérisée en ce que** l'étendue de ces parties avant (21) et arrière (22) de ce châssis auxiliaire (20) est telle qu'elle détermine une enveloppe de protection du moteur (2) et des parties auxiliaires qui empêche qu'ils soient heurtés involontairement à leurs parties sensibles telles que carburateur, tuyau d'échappement, bougie, réservoir d'essence ou autres ainsi que sur les parties convenablement couvertes par cette enveloppe tels que ses côtés.

11. Machine conformément à la revendication 2 **caractérisée en ce que** les membres tendeurs d'union (23, 24) sont agencés couvrant les côtés de l'ensemble du moteur (2) et des parties auxiliaires.

12. Machine conformément à la revendication 1 et qui comprend de plus des moyens pour que cela soit plus facile de retenir/saisir une branche ou un tronc secondaire y pour neutraliser l'effet de bonds involontaires de la tige (3) comprenant un accessoire de liaison (5, 50) qui retient une de ces extrémités de la tige (3) distale du membre (4), relié au mécanisme de transmission (1a) ou une partie (3a) de prolongement de celui-ci et qui permet que cette tige (2) tourne librement dans les deux sens sur son axe longitudinal.

13. Machine conformément à la revendication 1 qui comprend de plus des moyens pour limiter les contraintes excessives qui dévieraient les secousses, et l'effet négatif des bonds involontaires de la tige (3) qui comprend un membre de connexion (7, 7a) ayant une première (8) et deuxième (9) parties respectivement solidaires ou reliées à un premier (3a) et deuxième (3b) segments de cette tige (3), ces première (8) et deuxième (9) parties étant susceptibles d'être emboîtées l'une à l'autre et retenues ensemble par l'intermédiaire d'un membre de blocage (10) amovible assisté d'un élément de retenue (11) fait en un matériau qui se brise lorsqu'il subit des contraintes supérieures à un seuil ou à une valeur prédéterminée.

14. Machine conformément à la revendication 1 qui comprend de plus:
- un accessoire d'union (5) qui maintient cette extrémité de la tige (3) distale du membre (4) ou une partie de prolongement (3a) de celui-ci, relié à un mécanisme de transmission de la secousse (1a) et permettant que cette tige (3) tourne librement dans les deux sens sur son axe; et
- un membre de connexion (7, 7a) ayant une première (8) et une deuxième (9) parties respectivement solidaires ou reliées à un premier (3a) et une deuxième (3b) segments de cette tige (3), ces première (8) et deuxièmes (9) parties étant susceptibles de s'emboîter l'une à l'autre et de rester ensemble par l'intermédiaire d'un membre de blocage amovible (10) assisté d'un élément de retenue (11) fait en un matériau qui peut se briser lorsqu'il subit des contraintes supérieures à un seuil ou une valeur prédéterminée.
